# EUROPEAN PATENT APPLICATION

(11) **EP 0 911 734 A1**
(43) Date of publication of application: **28.04.1999**
(21) Application number: 98302409.2
(22) Date of filing: 30.03.1998
(51) Int. Cl.: G06F 11/00

(54) **Virus protection in a network environment**

(30) Priority: 25.09.1997 JP 260262/97
(71) Applicant: FUJITSU LIMITED, Kawasaki-shi, Kanagawa 211-8588 (JP)
(72) Inventor: Ishidera, Nobutaka, Inagi-shi, Tokyo, 206-8503 (JP); Satoh, Chikako, c/o Fujitsu Limited, Kawasaki-shi, Kanagawa, 211-8588 (JP)
(74) Representative: Hitching, Peter Matthew

(57) **Abstract**

A network system connects a plurality of terminal apparatuses (3-1-1 through 3-1-m1, 3-2-1 through 3-2-m2, ..., 3-n-1 through 3-n-mn), each of which has a computer virus checking program for checking for computer viruses, and a management apparatus (2; 50; 110; 210). The management apparatus sends computer virus checking requests, which cause the computer virus checking program to check for computer viruses, to the plurality of terminal apparatuses. The plurality of terminal apparatuses, in response to reception of the computer virus checking requests from the management apparatus, start performance of checking the plurality of terminal apparatuses for computer virus through the computer virus checking program and perform checking of the plurality of terminal apparatuses for computer viruses.

## Description

### BACKGROUND OF THE INVENTION

### 1. Field of the Invention

The present invention relates to a terminal management method and management apparatus, a terminal apparatus, a computer system using these apparatuses, and a recording medium in which a program for performing the above-mentioned method is recorded. In particular, the present invention relates to a terminal management method and management apparatus, a terminal apparatus, a computer system using these apparatuses, and a recording medium in which a program for performing the above-mentioned method is recorded, for collectively managing a plurality of the terminal apparatuses, connected with a network, through the management apparatus connected with the network.

Recently, in an information processing apparatus, because the number of computer viruses has increased, checking for computer viruses should be performed.

In particular, in a network environment, when one information processing apparatus, connected with a network, is infected with a computer virus, all the information processing apparatuses, connected with the network, are affected thereby. Therefore, in such a condition, checking for computer viruses should be performed periodically. For this purpose, the manager of the network collectively manages the state of checking for computer viruses performed in terminal apparatuses (information processing apparatuses) which are connected with the network.

However, because checking for computer viruses in each terminal apparatus is performed manually, it is difficult to manage a plan of checking for computer viruses in each terminal apparatus.

### 2. Description of the Related Art

In the related art, checking for computer viruses in information processing apparatuses in a network environment is performed in a manner in which a user of each information processing apparatus starts, in the information processing apparatus, a program for checking for computer viruses. The program is stored in the information processing apparatus.

In the above-mentioned method for checking for computer viruses in a network environment in the related art, a user of each information processing apparatus starts, in the information processing apparatus, a program for checking for computer viruses, which program is stored in the information processing apparatus, so as to perform the checking for computer viruses. Then, each user reports the result of the check for computer viruses to the manager of the network orally, via electronic mail, or the like. Thus, many manual operations are required to be performed, and thereby, checking for computer viruses may not be positively performed, and management of checking for computer viruses is difficult.

### SUMMARY OF THE PRESENT INVENTION

The present invention has been devised in consideration of the above-mentioned points. An object of the present invention is to provide a terminal management method and management apparatus, a terminal apparatus, a computer system using these apparatuses, and a recording medium in which a program for performing the above-mentioned method is recorded, by which checking for computer viruses in each information processing apparatus, connected with a network, is positively performed and managed.

A terminal management method, according to the present invention, for a network system through which a plurality of terminal apparatuses, each of which has computer virus checking means for checking for computer viruses, and a management apparatus are connected with, comprises the steps of:
a) causing the management apparatus to send computer virus checking requests, which causes the computer virus checking means to check for the computer viruses, to the plurality of terminal apparatuses;
b) causing the plurality of terminal apparatuses, in response to reception of the computer virus checking requests from the management apparatus, to starts performance of checking the plurality of terminal apparatuses for the computer virus through the computer virus checking means and to perform checking of the plurality of terminal apparatuses for the computer viruses.

Thereby, because checking of the terminal apparatuses for the computer viruses can be performed automatically in the terminal apparatuses in response to the requests from the management apparatus, respectively, checking of the terminal apparatuses for computer viruses can be positively performed in accordance with a predetermined schedule and can be effectively managed.

The step a) may cause the management apparatus to send the computer virus checking requests to previously set desired ones of the plurality of terminal apparatuses.

In this method, by dividing the terminal apparatuses into a plurality of groups so as to previously set desired terminal apparatuses to belong to the respective groups, it is possible that, at a certain time, the computer virus checking request is sent to the previously set desired terminal apparatus.

The terminal management method may further comprise the steps of:
c) causing the plurality of terminal apparatuses to send the results of checking for the computer viruses, obtained from performance of the step b), to the management apparatus; and
d) causing the management apparatus to collectively manage the results of checking for the computer viruses sent from the plurality of terminal apparatuses in the step c).

In this method, the results of checking of the terminal apparatuses for viruses are transmitted to the management apparatus and the management apparatus collectively manages these results. Thereby, infection of the computer viruses in the terminal apparatuses can be easily and collectively checked.

The terminal management method may further comprise the step of e) causing the management apparatus to send the results of checking for the computer viruses sent from the plurality of terminal apparatuses in the step c) to a previously set desired ones of the plurality of terminal apparatuses.

Thereby, the results of checking of the terminal apparatuses for viruses are transmitted not only to the management apparatus but also to the desired terminal apparatuses. As a result, infection of computer viruses in the terminal apparatuses can be also checked in the desired terminal apparatuses.

The terminal management method may further comprises the steps of:
c) causing the management apparatus to have, as management information for one of the plurality of terminal apparatuses, information indicating that a time limit by which checking for the computer viruses is performed has passed, when the time limit by which checking the one of the plurality of terminal apparatuses for the computer viruses is performed has passed by; and
d) causing the management apparatus not to send the computer virus checking request to the one of the plurality of terminal apparatuses.

In this method, it is possible to prevent the computer virus checking request from being sent to the terminal apparatus in which checking of terminal apparatuses is not performed. Thereby, unnecessary sending of computer virus checking requests can be prevented.

The step a) may cause the management apparatus to send, to the plurality of terminal apparatuses, computer virus patterns together with the computer virus checking requests, the computer virus patterns being used for finding a computer virus having a computer virus pattern of the computer virus patterns through the computer virus checking means.

Thereby, it is possible that, in each of the terminal apparatuses, checking for computer viruses can be performed using the same computer virus patterns. Further, only by updating the computer virus patterns in the management apparatus to the latest ones, it is possible that, in each of the terminal apparatuses, checking for the computer viruses can be performed using the latest computer virus patterns.

A terminal management method, according to the present invention, for a network system through which a management apparatus and a plurality of terminal apparatuses are connected with, comprises the steps of:
a) causing the management apparatus to be provided with computer virus checking means for checking for computer viruses;
b) causing the management apparatus to send computer virus checking requests to the plurality of terminal apparatuses;
c) causing the plurality of terminal apparatuses, in response to reception of the computer virus checking requests sent from the management apparatus, to access the computer virus checking means so as to cause the computer virus checking means to check the plurality of terminal apparatuses for the computer viruses.

In this method, it is not necessary that each of the plurality of terminal apparatuses should store the computer virus checking means. Thereby, the storage capacity of each terminal apparatus can be effectively used. Further, by causing the computer checking means to include computer virus patterns, then, by setting the version of the computer viruses into the latest ones, it is possible that, in each of the terminal apparatuses, checking for the computer viruses can be performed using the latest versions of computer virus patterns. Thus, it is possible to effectively cope with computer viruses.

The step b) may cause the management apparatus to send computer virus checking requests to previously set desired ones of the plurality of terminal apparatuses.

In this method, by dividing the terminal apparatuses into a plurality of groups so as to previously set desired client machines, to belong to each group, it is possible that, at a certain time, the computer virus checking request is sent to the previously set desired terminal apparatuses.

The terminal management method may further comprise the steps of:
d) causing the plurality of terminal apparatuses to send the results of checking for the computer viruses, obtained from performance of the step c), to the management apparatus; and
e) causing the management apparatus to collectively manage the results of checking for the computer viruses sent from the plurality of terminal apparatuses.

In this method, the results of checking of the terminal apparatuses for viruses are transmitted to the management apparatus and the management apparatus collectively manages these results. Thereby, infection of terminal apparatuses by the computer viruses can be easily and collectively checked.

The terminal management method may further comprises the step of f) causing the management apparatus to send the results of checking for the computer viruses sent from the plurality of terminal apparatuses to a previously set desired ones of the plurality of terminal apparatuses.

Thereby, the results of checking the terminal apparatuses for viruses are transmitted not only to the management apparatus but also to the desired terminal apparatuses. As a result, infection of terminal apparatuses by computer viruses can be also checked in the desired terminal apparatuses.

The terminal management method may further comprises the steps of:
d) causing the management apparatus to have, as management information for one of the plurality of terminal apparatuses, information indicating that a time limit by which checking for the computer viruses is performed has passed by, when the time limit by which checking the one of the plurality of terminal apparatuses for the computer viruses is performed has passed by; and
e) causing the management apparatus not to send the computer virus checking request to the one of the plurality of terminal apparatuses.

In this method, it is possible to prevent the computer virus checking request from being sent to the terminal apparatus in which checking for terminal apparatuses is not performed. Thereby, unnecessary sending of computer virus checking requests can be prevented.

A management apparatus, according to the present invention, connected with a plurality of terminal apparatuses through a network, each of the plurality of terminal apparatuses being provided with computer virus checking means for checking for computer viruses, comprising:
means for producing computer virus checking requests for starting performance of checking for the computer viruses through the computer virus checking means; and
means for sending the computer virus checking requests to the plurality of terminal apparatuses, respectively.

In this arrangement, because checking of the terminal apparatuses for computer viruses can be automatically performed in the terminal apparatuses in response to the requests from the management apparatus, respectively, checking of terminal apparatuses for computer viruses can be positively performed in accordance with a predetermined schedule and can be effectively managed.

The management apparatus may further comprise designating means for designating as to, to which ones of the plurality of terminal apparatuses the computer virus checking requests are transmitted,
wherein the management apparatus transmits the computer virus checking requests to the terminal apparatuses designated by the designating means.

In this arrangement, by dividing the terminal apparatuses into a plurality of groups so as to previously set desired client machines, to undergo virus checking at a certain time, to belong to each group, it is possible that, at a certain time, the computer virus checking request is sent to the certain previously set desired terminal apparatuses.

The management apparatus may further comprises:
receiving means for receiving the results of checking of the plurality of terminal apparatuses for the computer viruses in response to the computer virus checking requests; and
managing means for managing the results of checking for the computer viruses received from the plurality of terminal apparatuses.

In this apparatuses, results of checking of the terminal apparatuses for viruses are transmitted to the management apparatus and the management apparatus collectively manages these results. Thereby, infection of terminal apparatuses by computer viruses can be easily and collectively checked.

The management apparatus may further comprise transmitting means for transmitting the results of checking for the computer viruses, received from the plurality of terminal apparatuses, to previously set desired ones of the plurality of terminal apparatuses.

Thereby, results of checking of terminal apparatuses for viruses are transmitted not only to the management apparatus but also to the desired terminal apparatuses. As a result, infection of terminal apparatuses by computer viruses can also be checked in the desired terminal apparatuses.

The management apparatus may further comprise:
determining means for determining whether a time limit by which checking each of the plurality of terminal apparatuses for the computer viruses is performed has passed by;
information providing means for providing, as management information of one of the plurality of terminal apparatuses, information indicating that the time limit by which checking for the computer viruses is performed has passed by, when the time limit by which checking the one of the plurality of terminal apparatuses for the computer viruses is performed has passed by; and
preventing means for preventing the sending means from sending the computer virus checking request to the one of the plurality of terminal apparatuses.

In this apparatus, it is possible to prevent the computer virus checking request from being sent to the terminal apparatus in which checking for terminal apparatuses is not performed. Thereby, unnecessary sending of computer virus checking requests can be prevented.

The management apparatus may comprise computer virus pattern sending means for sending computer virus patterns to the plurality of terminal apparatuses, the computer virus patterns being used for finding a computer virus having a computer virus pattern of the computer virus patterns through the computer virus checking means.

Thereby, it is possible that, in each of the terminal apparatuses, checking for computer viruses can be performed using the same computer virus patterns. Further, by updating the computer virus patterns in the management apparatus to the latest patterns, it is possible that, in each of the terminal apparatuses, checking for computer viruses can be performed using the latest computer virus patterns.

A terminal apparatus, according to the present invention, connected with a management apparatus through a network, comprising:
means for receiving a computer virus checking request from the management apparatus;
means for starting performance of checking for computer viruses, in response to reception of the computer virus checking request; and
means for performing checking for computer viruses.

In this arrangement, because checking of the terminal apparatus for computer viruses can be automatically performed in the terminal apparatus in response to the requests from the management apparatus, respectively, checking of the terminal apparatus for computer viruses can be positively performed in accordance with a predetermined schedule and can be effectively managed.

The terminal apparatus may further comprise means for sending the results of checking for the computer viruses, performed in response to reception of the computer virus checking request, to the management apparatus. Thereby, the result of checking of the terminal apparatus for viruses is transmitted to the management apparatus and the management apparatus collectively manages the result together with the results from other terminal apparatuses. Thereby, infection of terminal apparatuses by computer viruses can be easily and collectively checked.

The receiving means may receive computer virus patterns together with the computer virus checking request; and
the performing means may perform checking for the computer viruses using the received computer virus patterns.

Thereby, it is possible that, in the terminal apparatus, checking for computer viruses can be performed using the same computer virus patterns as those used in other terminal apparatuses. Further, by updating the computer virus patterns in the management apparatus to the latest patterns, it is possible that, in each of the terminal apparatuses, checking for computer viruses can be performed using the latest computer virus patterns.

A terminal apparatus, according to the present invention, connected with a management apparatus through a network, comprising:
means for receiving a computer virus checking request from the management apparatus; and
means for accessing computer virus checking means of the management apparatus in response to reception of the computer virus checking request and performing checking the terminal apparatus for the computer viruses.

In this arrangement, it is not necessary that the terminal apparatus should store the computer virus checking means. Thereby, the storage capacity of the terminal apparatus can be effectively used. Further, by causing the computer checking means to include computer virus patterns, then, by setting the version of the computer viruses into the latest patterns, it is possible that checking for computer viruses can be performed using the computer virus patterns of the latest version. Thus, it is possible to effectively cope with computer viruses.

A computer system, according to the present invention, in which a plurality of terminal apparatuses, each of which has computer virus checking means for checking for computer viruses, and a management apparatus are connected with through a network, comprises:
management apparatus provided with computer virus checking request transmitting means for transmitting computer virus checking requests for causing of the computer virus checking means to start checking for the computer viruses to the plurality of terminal apparatuses;
the plurality of terminal apparatuses provided with computer virus checking starting means, in response to reception of the computer virus checking requests from the management apparatus, for causing the computer virus checking means to start checking for the computer virus.

In this arrangement, because checking of terminal apparatuses for computer viruses can be automatically performed in the terminal apparatuses in response to the requests from the management apparatus, respectively, checking of terminal apparatuses for computer viruses can be positively performed in accordance with a predetermined schedule and can be effectively managed.

A computer system, according to the present invention, in which a management apparatus is connected with a plurality of terminal apparatuses through a network, wherein;
the management apparatus is provided with:
computer virus checking means for checking for computer viruses; and
computer virus checking request transmitting means for transmitting the computer virus checking requests to the plurality of terminal apparatuses; and
the plurality of terminal apparatuses is provided with:
accessing means for accessing the computer virus checking means of the management apparatus in response to reception of the computer virus checking requests from the management apparatus; and
computer virus checking performing means for performing checking of the plurality of terminal apparatuses for computer viruses through the computer virus checking means.

In this arrangement, it is not necessary that each of the plurality of terminal apparatuses should store the computer virus checking means. Thereby, the storage capacity of each terminal apparatus can be effectively used. Further, by causing the computer checking means to include computer virus patterns, then, by setting the version of the computer viruses into the latest versions, it is possible that, in each of the terminal apparatuses, checking for computer viruses can be performed using the computer virus patterns of the latest version. Thus, it is possible to effectively cope with computer viruses.

A computer readable recording medium, according to the present invention, used in a computer which is connected with, via a network, a plurality of terminal apparatuses, each of which comprises computer virus checking means for checking for computer viruses, having computer readable program code means embodied in the medium, the computer readable program code means comprising:
program code means for producing computer virus checking requests which cause the computer virus checking means to start checking for the computer viruses; and
program code means for transmitting the thus-produced computer virus checking requests to the plurality of terminal apparatuses.

In this arrangement, because checking of terminal apparatuses for computer viruses can be automatically performed in the terminal apparatuses in response to the requests from the management apparatus, respectively, checking of terminal apparatuses for computer viruses can be positively performed in accordance with a predetermined schedule and can be effectively managed.

A computer readable recording medium, according to the present invention, used in a computer which is connected with a management apparatus through a network, having computer readable program code means embodied in the medium, the computer readable program code means comprising:
computer program code means for receiving a computer virus checking request from the management apparatus;
computer program code means for starting performance of checking for computer viruses; and
computer program code means for performing checking for computer viruses.

In this arrangement, because checking of terminal apparatuses for computer viruses can be automatically performed in the terminal apparatuses in response to the requests from the management apparatus, respectively, checking of terminal apparatuses for computer viruses can be positively performed in accordance with a predetermined schedule and can be effectively managed.

A computer readable recording medium, according to the present invention, used in a computer connected with a management apparatus through a network, having computer readable program code means embodied in the medium, the computer readable program code means comprising:
computer program code means for receiving computer virus checking request from the management apparatus;
computer program code means, in response to reception of the computer virus checking request, for accessing computer virus checking means of the management apparatus, and starting performance of checking for computer viruses through the computer virus checking means; and
computer program code means for performing checking the computer for the computer viruses through the computer virus checking means.

In this arrangement, it is not necessary that each of the plurality of terminal apparatuses should store the computer virus checking means. Thereby, the storage capacity of each terminal apparatus can be effectively used. Further, by causing the computer checking means to include computer virus patterns, then, by setting the version of computer viruses into the latest versions, it is possible that, in each of the terminal apparatuses, checking for computer viruses can be performed using the computer virus patterns of the latest version. Thus, it is possible to effectively cope with the computer viruses.

Other objects and further features of the present invention will become more apparent from the following detailed description when read in conjunction with the accompanying drawings.

### BRIEF DESCRIPTION OF THE DRAWINGS

FIG.1 shows a system arrangement of a first embodiment of the present invention;
FIG.2 shows a block diagram of a server machine in the first embodiment of the present invention;
FIG.3 shows a data arrangement of a computer virus checking request schedule in the first embodiment of the present invention;
FIG.4 shows a data arrangement of a checking result storage area in the first embodiment of the present invention;
FIG.5 shows a block diagram of a client machine in the first embodiment of the present invention;
FIG.6 shows a data arrangement of a computer virus checking result storage area of the client machine in the first embodiment of the present invention;
FIG.7 shows a data arrangement of a computer virus pattern area of the client machine in the first embodiment of the present invention;
FIG.8 shows an operation flowchart of a computer virus checking request program of the server machine in the first embodiment of the present invention;
FIG.9 shows an operation flowchart of a computer virus checking program of the client machine in the first embodiment of the present invention;
FIG.10 shows an operation flowchart of a computer virus checking result processing program of the server machine in the first embodiment of the present invention;
FIG.11 shows a format of a list of the results of checking for computer viruses, which is transmitted to the group manager, in the first embodiment of the present invention;
FIG.12 shows a block diagram of a server machine in a second embodiment of the present invention;
FIG.13 shows an operation flowchart of a computer virus checking request program of the server machine in the second embodiment of the present invention;
FIG.14 shows a block diagram of a server machine in a third embodiment of the present invention;
FIG.15 shows a block diagram of a client machine in the third embodiment of the present invention;
FIG.16 shows an operation flowchart of a computer virus checking control program of the client machine in the third embodiment of the present invention;
FIG.17 shows a block diagram of a server machine in a fourth embodiment of the present invention;
FIG.18 shows a data arrangement of a sending state management area in a file device of a server machine in the fourth embodiment of the present invention; and
FIG.19 shows an operation flowchart of a computer virus checking request processing program of the server machine in the fourth embodiment of the present invention.

### DETAILED DESCRIPTION OF THE PREFERRED EMBODIMENTS

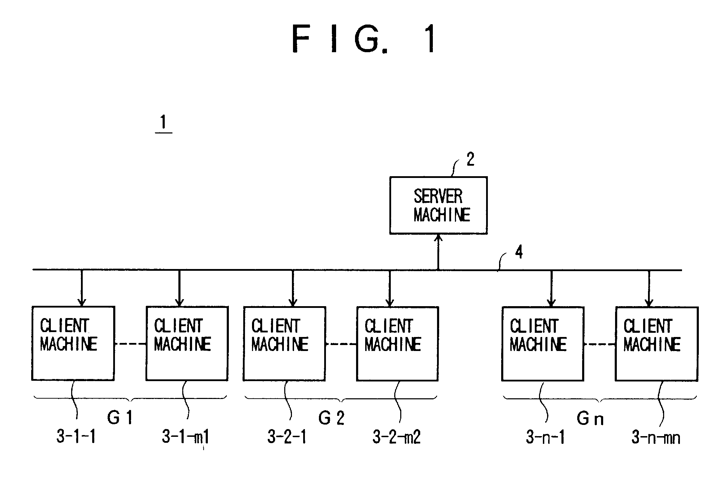

FIG.1 shows a system arrangement of a first embodiment of the present invention.

In a network system 1 in the first embodiment, a server machine 2 and client machines 3-1-1 through 3-1-m1, 3-2-1 through 3-2-m2, ..., 3-n-1 through 3-n-mn are connected through a network 4.

First, an arrangement of the server machine 2 will now be described with reference to a figure.

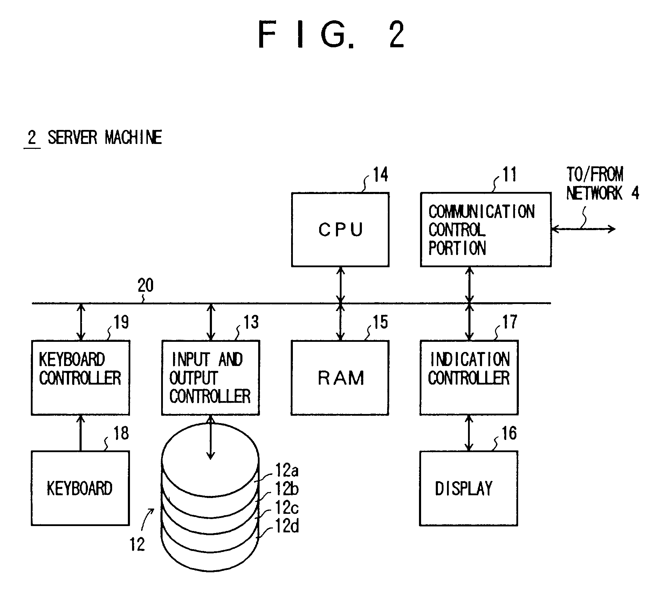

FIG.2 shows a block diagram of a server machine 2 in the first embodiment of the present invention.

The server machine 2 includes a communication control portion 11 which controls communication with the network 4, a file device 12 in which information, which is to be supplied to the client machines 3-1-1 through 3-1-m1, 3-2-1 through 3-2-m2, ..., 3-n-1 through 3-n-mn, is stored, an input and output controller 13 which performs control of writing information in the file device 12 and reading information from the file device 12, a CPU 14 which performs operations in accordance with computer virus checking request program stored in a program area of the file device 12, a RAM 15 which is used as a work area of the CPU 14, a display 16 which indicates the result of the operations, an indication controller 17 which controls the display 16, a keyboard 18 for inputting commands and data, a keyboard controller 19 which controls input through the keyboard 18, and a bus 20 through which the communication control portion 11, input and output controller 13, CPU 14, RAM 15, indication controller 17 and keyboard controller 19 are connected.

The communication control portion 11 is connected with the network 4, and connects the server machine 2 with the client machines 3-1-1 through 3-1-m1, 3-2-1 through 3-2-m2, ..., 3-n-1 through 3-n-mn.

The file device 12 includes a data area 12a in which data is stored, the program area 12b in which programs executed in the server machine 2 are stored, a computer virus checking request schedule areas 12c in which data, which controls timing of execution of computer virus checking request program, is stored, and checking result storage areas 12d which hold results of checking for computer viruses, supplied from the client machines 3-1-1 through 3-1-m1, 3-2-1 through 3-2-m2, ..., 3-n-1 through 3-n-mn, when a computer virus checking result processing program is executed.

Programs such as the above-mentioned computer virus checking request program, computer virus checking result processing program and so forth, and data are supplied via the communication control portion 11, or are supplied as a result of being read from a portable recording medium such as a CD-ROM, a floppy disk or the like through a reading device. The portable recording medium has the above-mentioned programs and data previously recorded. The thus-supplied programs and data are stored in the program area 12a and computer virus checking request schedule areas 12c of the file device 12. These programs are stored in the RAM 15 when the programs are executed. The CPU 14 performs predetermined operations in accordance with the programs.

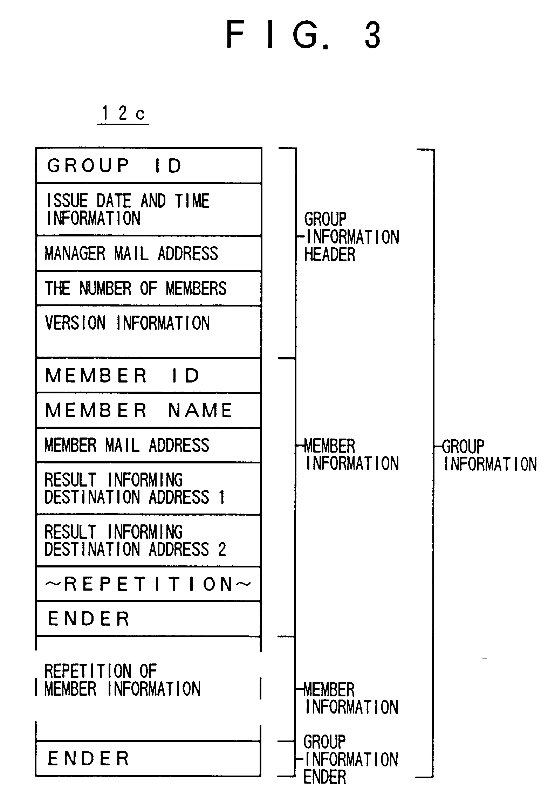

FIG.3 shows a data arrangement of the computer virus checking request schedule in the first embodiment of the present invention.

The server machine 2 manages the client machines 3-1-1 through 3-1-m1, 3-2-1 through 3-2-m2, ..., 3-n-1 through 3-n-mn in a manner in which the client machines are divided into a plurality of groups G1 through Gn. As shown in FIG.1, a group G1 includes the client machines 3-1-1 through 3-1-m1, a group G2 includes the client machines 3-2-1 through 3-2-m2, ..., and a group Gn includes the client machines 3-1-1 through 3-n-mn.

The computer virus checking request schedule areas 12c are set for the groups G1 through Gn, respectively. The computer virus checking request schedule area 12c of each group (group information area) mainly includes a group information header area which stores information of the group for which a schedule is set, a member information area which stores member information of members (client machines) which belong to the group set in the group information header area, and a group information ender area which stores information indicating the end of the information of the group.

The group information header area includes a group ID area for identifying the group for which a schedule is set, an issue date and time information area manager mail address area for storing the mail address of the manager of the group, a member number area for setting the number of the client machines which belong to the group, and a version information area which stores information of a version of patterns of computer viruses (hereinafter, referred to as 'computer virus patterns'), which are used by a computer virus checking program for checking for computer viruses. The issue date and time information is previously set so that a computer virus checking request is issued periodically, or in accordance with a predetermined schedule. For example, the issue date and time information indicates a predetermined date and time every month, a time on a predetermined plurality of dates every year, a time on a predetermined day every week, or the like.

Each member information area includes a member ID area which stores information for identifying the client machine is to be checked for computer viruses, a member name area for setting the name or the like of the person who uses the client machine which is to be checked for computer viruses, a member mail address area for setting the mail address of the person who uses the client machine which is to be checked for computer viruses, a result informing destination address areas for setting the addresses of the destinations and an ender area which stores information indicating that the member information areas are terminated. As shown in FIG.3, the member information areas for all the client machines belonging to the group are arranged after the group information header area. Then, the ender area is added to the last of the group information area. The above-mentioned destinations, which are to be informed of the result of checking for computer viruses, are previously set desired ones of the client machines 3-1-1 through 3-1-m1, 3-2-1 through 3-2-m2, ..., 3-n-1 through 3-n-mn.

The server machine 2 monitors the above-described computer virus checking request schedule areas 12c. Then, when the present date and time are indicated by the information set in the issue date and time information area of the computer virus checking request schedule area 12c of the group, as described later, the server machine 2 requests a check for computer viruses based on the information set in the computer virus checking request schedule area 12c of the group.

As mentioned above, the computer virus checking request schedule area 12c is set for each one of the groups G1 through Gn. In this arrangement, it is possible to set different schedules in the issue date and time information areas of the group information header areas of the group information for the groups G1 through Gn, respectively. Then, when dividing the client machines 3-1-1 through 3-1-m1, 3-2-1 through 3-2-m2, ..., 3-n-1 through 3-n-mn into the groups, by previously setting desired client machines to belong to each group, it is possible that, at a certain time, the computer virus checking request is sent to the previously set desired client machines.

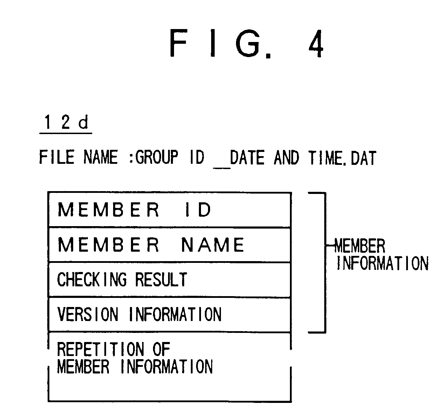

FIG.4 shows a data arrangement of each checking result storage area 12d in the first embodiment of the present invention.

The checking result storage areas 12d are also set for the group G1 through Gn, respectively. Each checking result storage area 12d includes a member ID area for storing a member ID for identifying the client machine, a member name area for storing a member name such as a name of a person who uses the member ID stored in the member ID area, a checking result area for storing the result of checking for computer viruses in the client machine of the member ID stored in the member ID area, and a version information area for storing the information of the version of the computer virus patterns which were used by the computer virus checking program for checking for computer viruses. Then, the member ID area, member name area, check result area and version information area are arranged for each member of the group in the check result storage area 12d.

In accordance with the computer virus checking request program and the schedule previously stored in the computer virus checking request schedule area 12c of the group, the server machine 2 transmits computer virus checking requests to the client machines belonging to the group. Then, in accordance with the computer virus checking result processing program, the server machine 2 collects the results of checking for computer viruses performed in the client machines belonging to the group, and transmits the collected results to the manager of the group.

An arrangement of each of the client machines 3-1-1 through 3-1-m1, 3-2-1 through 3-2-m2, ..., 3-n-1 through 3-n-mn will now be described with reference to a figure.

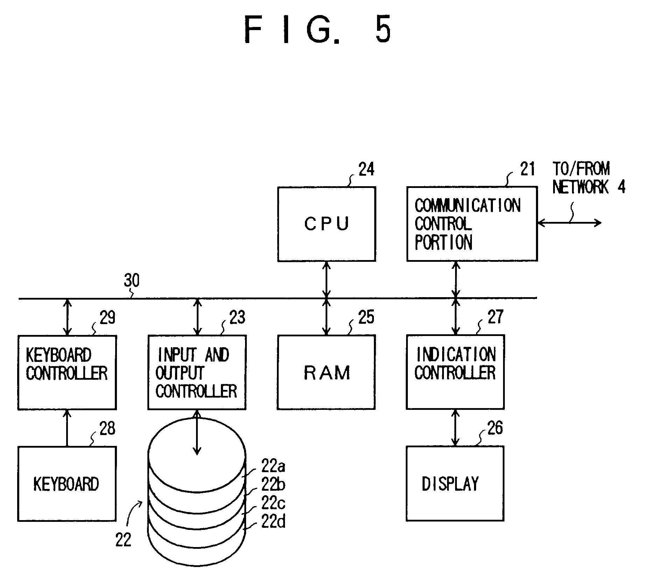

FIG.5 shows a block diagram of each client machine in the first embodiment of the present invention.

Each of the client machines 3-1-1 through 3-1-m1, 3-2-1 through 3-2-m2 ..., 3-n-1 through 3-n-mn includes a communication control portion 21 which controls communication with the network 4, a file device 22 for storing data and programs, an input and output controller 23 which performs control of writing information in the file device 22 and reading information from the file device 22, a CPU 24 which performs checking for computer viruses in accordance with the computer virus checking program stored in a program area of the file device 22, a RAM 25 which is used as a work area of the CPU 24, a display 26 which indicates the result of checking for computer viruses, an indication controller 27 which controls the display 26, a keyboard 28 for inputting commands and data, a keyboard controller 29 which controls input through the keyboard 28, and a bus 30 through which the communication control portion 21, input and output controller 23, CPU 24, RAM 25, indication controller 27 and keyboard controller 29 are connected.

The communication control portion 21 is connected with the network 4 and controls connection with the server machine 2.

The file device 22 includes a data area 22a for storing data, a program area 22b for storing programs which are executed in the client machine, a checking result storage area 22c for storing the result of checking for computer viruses, and a computer virus pattern area 22d for storing computer virus patterns which are used when the computer virus checking program is executed.

Programs such as the computer virus checking program and so forth, and information of patterns of computer viruses are supplied via the communication control portion 21, or are supplied as a result of being read from a portable recording medium such as a CD-ROM, a floppy disk or the like through a reading device. The portable recording medium is previously recorded with the above-mentioned programs and information. The thus-supplied programs and information are stored in the program area 22b and computer virus pattern area 22d of the file device 22. These programs are stored in the RAM 25 when the programs are executed. The CPU 24 performs predetermined operations in accordance with the programs.

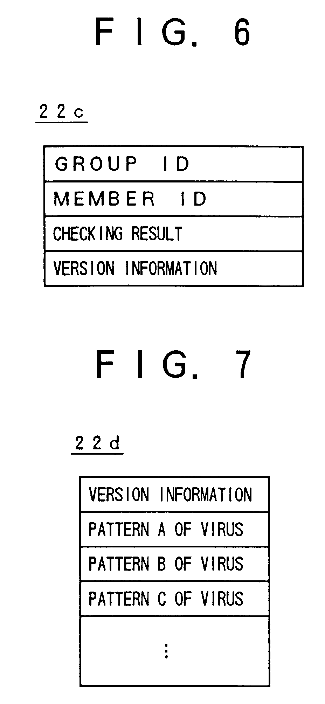

FIG.6 shows a data arrangement of the checking result storage area 22c of each client machine in the first embodiment of the present invention.

Each of the client machines 3-1-1 through 3-1-m1, 3-2-1 through 3-2-m2 ..., 3-n-1 through 3-n-mn stores the computer virus checking result in the checking result storage area 22c having the data arrangement shown in FIG.6. Then, the client machine transmits the stored computer virus checking result to the server machine 2.

As shown in FIG.6, in each of the client machines, the check result storage area 22c includes a group ID area for storing the group ID which is used for recognizing the group to which the client machine belongs, a member ID area for storing the member ID which is used for recognizing the client machine, a result area for storing the result of checking for computer viruses, and a version information area for storing the information of the version of the computer virus patterns which were used by the computer virus checking program for checking for computer viruses.

FIG.7 shows a data arrangement of the computer virus pattern area 22d in the first embodiment of the present invention.

The computer virus pattern area 22d set in the file device 22 of each of the client machines 3-1-1 through 3-1-m1, 3-2-1 through 3-2-m2 ..., 3-n-1 through 3-n-mn includes a version information area for storing the version information for identifying the version of the computer virus patterns which are used by the computer virus checking program for checking for computer viruses, which have these computer virus patterns, respectively, and the computer virus pattern areas, which store the computer virus patterns of the above-mentioned version, respectively.

The client machine starts the computer virus checking program in response to reception of the computer virus check request supplied from the server machine 2 to the client machine. Then, the client machine refers to the patterns of computer viruses of the computer virus pattern area 22d set in the file device 22, and compares the data stored in the data area 22a and program area 22d with the patterns of computer viruses of the computer virus pattern area 22d. Thus, the client machine searches these patterns of computer viruses. Then, when there is data which is the same as the pattern of computer virus, it is determined that a computer virus exists, and removal of the computer virus is performed.

With reference to a figure, operations of the computer virus request checking program executed by the server machine 2 will now be described.

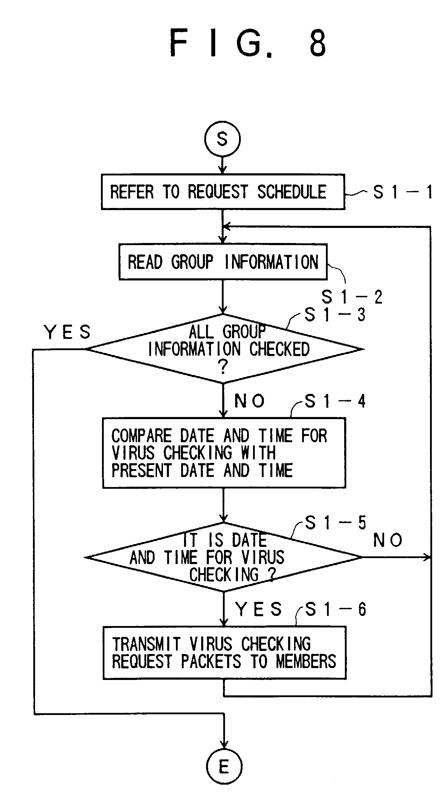

FIG.8 shows an operation flowchart of the computer virus checking request program of the server machine 2 in the first embodiment of the present invention.

In the server machine 2, in accordance with the computer virus checking request program, first, the request schedule areas 12c shown in FIG.3 are referred to and the group information set in the request schedule areas 12c is read in sequence (in steps S1-1, S1-2 and S1-3).

Then, the issue date and time information stored in the issue date and time information area of the group information is read and is compared with the present date and time (in a step S1-4). When the thus-read issue date and time information indicates the present date and time (Yes of a step S1-5) for one group, the member information, for the respective members, of the group information of the group is read in sequence. Then, virus checking request packets are transmitted to the network 4 for the client machines of the member mail addresses of the thus-read member information for the respective members (in a step S1-6).

The client machines 3-1-1 through 3-1-m1, 3-2-1 through 3-2-m2 ..., 3-n-1 through 3-n-mn monitor the packets transmitted to the network 4. The client machines belonging to the group receive, from the network 4, the packets which have been transmitted to the network 4 for the client machines of the group, respectively.

Operations of the computer virus checking program of each of the client machines 3-1-1 through 3-1-m1, 3-2-1 through 3-2-m2 ..., 3-n-1 through 3-n-mn will now be described with reference to a figure.

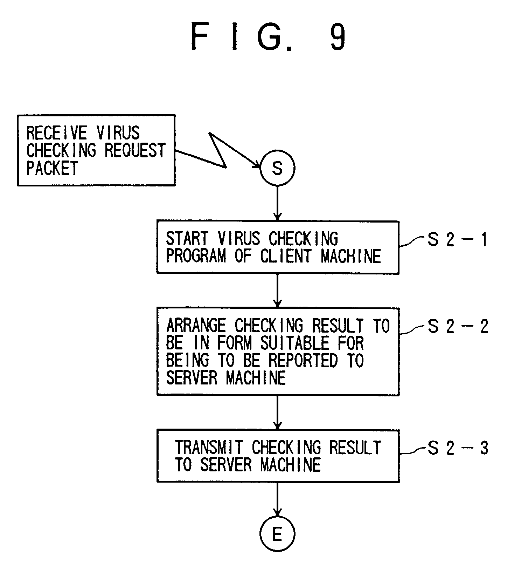

FIG.9 shows an operation flowchart of the computer virus checking program of each client machine in the first embodiment of the present invention.

Each of the client machines 3-1-1 through 3-1-m1, 3-2-1 through 3-2-m2 ..., 3-n-1 through 3-n-mn performs the same operations when receiving the computer virus checking request packet from the server machine. Accordingly, the operations of the computer virus checking program will be described for one client machine of client machines 3-1-1 through 3-1-m1, 3-2-1 through 3-2-m2 ..., 3-n-1 through 3-n-mn. The client machine receives the computer virus checking request packet from the server machine 2, which packet has been transmitted to the network 4 for this client machine. Then, the client machine starts the computer virus checking program (in a step S2-1).

When the computer virus checking program is started in the step S2-1, the data stored in the data area 22a and program area 22b of the file device 22 is read in sequence. The read data is compared with the computer virus patterns stored in the computer virus pattern areas 22d so that the computer virus patterns are searched for the computer virus pattern corresponding to the data. When, by this comparison, it is determined that there is data which is the same as one of the computer virus patterns, it is determined that a computer virus exists in the client machine. Then, the computer virus is removed, and the version information of the version of the computer virus pattern and the information of the detected virus are held in the client machine. When, by the above-mentioned comparison, it is determined that there is no data which is the same as one of the computer virus patterns, it is determined that no computer virus exists in the client machine. Then, the version information of the version of the computer virus patterns which were used for checking for computer viruses corresponding to the computer virus patterns, and the information indicating that no computer virus exists are held in the client machine.

Then, the result of checking for computer viruses through the computer virus checking program is arranged to be in a form suitable for being transmitted to the server machine 2. The thus-arranged result is stored in the computer virus checking result area 22c (in a step S2-2).

Then, in the step S2-3, a packet to be transmitted to the server machine 2 is produced and transmitted to the server machine 2. This packet includes result report information including the group ID of the group to which the client machine belongs, the member ID of the client machine, the result of checking for computer viruses and the version information of the version of the above-mentioned used computer virus patterns as shown in FIG.6.

When receiving the result of the check for the computer viruses from the client machine, the server machine 2 executes the computer virus checking result processing program.

Then, with reference to a figure, operations of the computer virus checking result processing program of the server machine 2 will now be described.

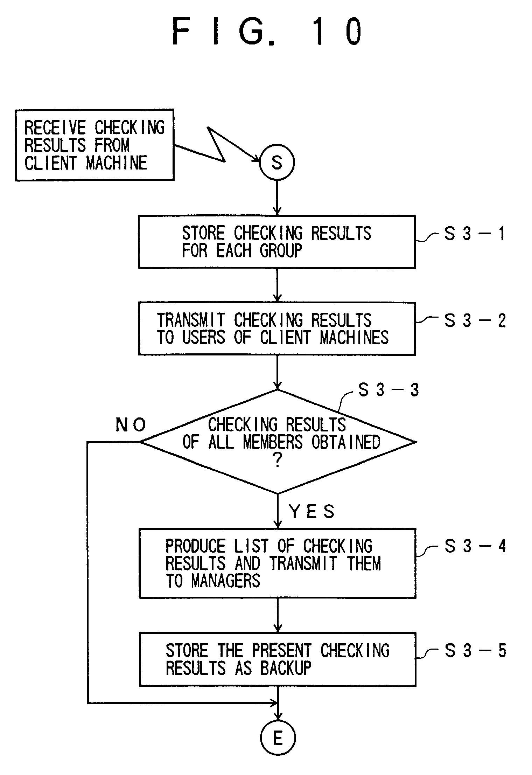

FIG.10 shows an operation flowchart of the computer virus checking result processing program of the server machine 2, in the first embodiment of the present invention.

When the packets of the results of checking for the computer viruses from the client machines belonging to the group are received by the server machine 2, in the server machine 2, the computer virus checking result processing program is started. Thereby, the results of checking for the computer viruses received from the client machines belonging to the group are stored in the check result storage area 12d of the group (in a step S3-1).

The results of checking for the computer viruses for the group include the results of checking for the computer viruses for the respective members (client machines) which are arranged in sequence, as shown in FIG.4. Information for each member includes the member ID, the member name, the result of checking for the computer viruses, and the version information of the version of the computer virus patterns which were used for checking for computer viruses corresponding to the computer virus patterns. This information for each member is arranged in sequence and is stored in each check result storage area 12d as a file. For example, the name of the file includes the group ID and the date and time at which checking for the computer viruses was performed, which are arranged so that an under-bar symbol is inserted between the group ID and the date and time at which the checking for computer viruses was performed, and a file form (extension) is added to the file name. Thereby, the date and time at which the checking for the computer viruses was performed can be easily recognized from the file name.

After the results of checking for computer viruses from the client machines belonging to the group are stored as shown in FIG.4, the results of checking for the computer viruses are transmitted to the destinations of the addresses, respectively, information of which is stored in the result informing destination addresses areas of the member information areas of the computer virus checking request schedule area 12c of the group, respectively (in a step S3-2).

After the results of checking for the computer viruses of the client machines belonging to the group are obtained and stored in the check result storage area 12d (Yes of a step S3-3), a list of the results of checking for the computer viruses of the client machines is produced for the group and the list for the group is transmitted to the destination of the manager mail address, information of which is stored in the manager mail address of the group information header area of the computer virus checking request schedule area 12c shown in FIG.3 of the group (in a step S3-4).

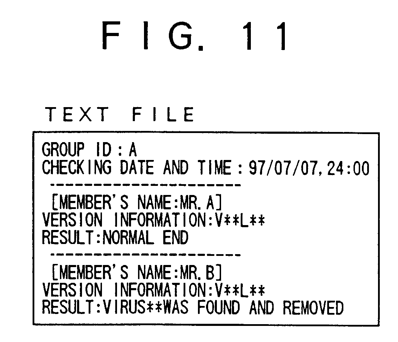

FIG.11 shows a format of the list of the results of checking for the computer viruses, which is transmitted to the manager for each group.

In a step S3-4, the list of the results of checking for the computer viruses is produced for the group in a text file format and is transmitted to the manager of the group. As shown in FIG.11, the list of the results of checking for the computer viruses includes, at the top thereof, the group ID and the date and time at which checking the computer viruses was performed. In the list shown in FIG.11, the group ID is 'A' and the date and time at which checking was performed are 'July 7, 1997, 24:00'.

From the subsequent line, the results of checking for computer viruses of the client machines belonging to the group, are recorded in sequence. In an area in which each result of checking for the computer viruses is recorded, the member name, version information and result of checking for computer viruses are recorded.

In the top area starting from the subsequent line of FIG.11, the member name 'Mr.A', the version information 'V**L**' of the used computer virus patterns, and the results of checking for the computer viruses 'Normal end' are recorded. The words 'Normal end' indicate that no computer virus has been found.

In the bottom area of FIG.11, the member name 'Mr.B', the version information 'V**L**' of the used computer virus patterns, and the results of checking for computer virus that the computer virus '**' has been found and removed are recorded. Information such as that shown in FIG.11 is supplied as a text file.

The manager of the group refers to the list of the results of checking for the computer viruses such as that shown in FIG.11, and recognize the results of checking for computer viruses for the group managed by the manager.

After the list of results of checking for computer viruses has been transmitted to the respective manager of the group in the step S3-4, the list of results of checking for computer viruses is stored in the checking result storage area 12d (of the group) of the file device 12 as backups, respectively (in a step S3-5).

The case where checking for computer viruses is performed in one group of the client machines has been described. However, the above-described operations with regard to the group are also performed in the other groups of the client machines when receiving the computer virus checking request packets from the server machine 2, respectively, in accordance with the schedule set in the computer virus checking request schedule such as that shown in FIG.3.

In the first embodiment, checking for the computer viruses for the client machines 3-1-1 through 3-1-m1, 3-2-1 through 3-2-m2, ..., 3-n-1 through 3-n-mn can be automatically performed in response to the request sent from the server machine 2. Accordingly, checking the computer viruses can be positively performed. Further, checking for computer viruses is performed in accordance with a previously set schedule. Thereby, by setting a time, at which checking for the computer viruses is performed, during a time in which the server machine 4 and the client machines 3-1-1 through 3-1-m1, 3-2-1 through 3-2-m2, ..., 3-n-1 through 3-n-mn are not used, checking for computer viruses can be performed without obstructing ordinary works. Further, because it is possible to perform checking for computer viruses periodically or in accordance with a predetermined schedule, such checking can be performed effectively.

In the first embodiment, each of the client machines 3-1-1 through 3-1-m1, 3-2-1 through 3-2-m2, ..., 3-n-1 through 3-n-mn has the computer virus checking program loaded therein. However, the number of computer virus patterns increases year by year. In the arrangement of the first embodiment, when the computer virus patterns are updated, it is necessary to install the latest computer virus patterns in each of the client machines 3-1-1 through 3-1-m1, 3-2-1 through 3-2-m2, ..., 3-n-1 through 3-n-mn. This work is troublesome. Further, when installation of the latest computer virus patterns is missed for even one client machine of the client machines 3-1-1 through 3-1-m1, 3-2-1 through 3-2-m2 ..., 3-n-1 through 3-n-mn, this client machine does not have the latest computer virus patterns installed therein. As a result, when one of the latest computer virus exists in this client machine, the latest virus cannot be found.

Therefore, an arrangement in which computer virus patterns are supplied from the server machine can be considered.

As a second embodiment of the present invention, an embodiment in which the computer virus patterns are supplied from a server machine will now be described. The system arrangement of the second embodiment is the same as that of the first embodiment shown FIG.1, and the arrangements and operations of the client machines 3-1-1 through 3-1-m1, 3-2-1 through 3-2-m2 ..., 3-n-1 through 3-n-mn in the second embodiment are the same as those of the first embodiment, respectively. Therefore, the description thereof will be omitted.

First, the arrangement of a server machine 50 in the second embodiment will now be described with reference to a figure.

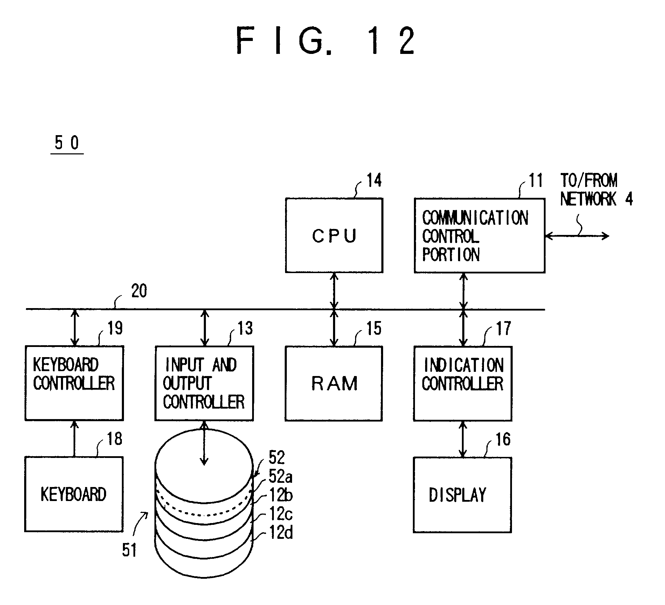

FIG.12 shows a block diagram of the server machine 50 in the second embodiment of the present invention. In FIG.12, the same reference numerals are given to the blocks which are the same as those of FIG.2, respectively, and description thereof will be omitted.

In the server machine 50 in the second embodiment, a latest computer virus pattern data area 52a is provided, in a data area 52 of the file device 51, for storing the latest computer virus patterns.

When transmitting the computer virus checking request to the client machines of the group which is determined based on the schedule set in the computer virus checking request schedule areas 12c, the server machine 50 refers to the version information stored in the group information header area of one of the computer virus checking request schedule areas 12c, which corresponds to the group. The server machine 50 compares the thus-referred version information of the computer virus checking request schedule area 12c with the version information stored in the latest computer virus pattern data area 52a. By the comparison, if it is determined that each of the client machines belonging to the group lacks certain computer virus patterns, the server machine 50 transmits the missing patterns to each of these client machines together with the computer virus checking request.

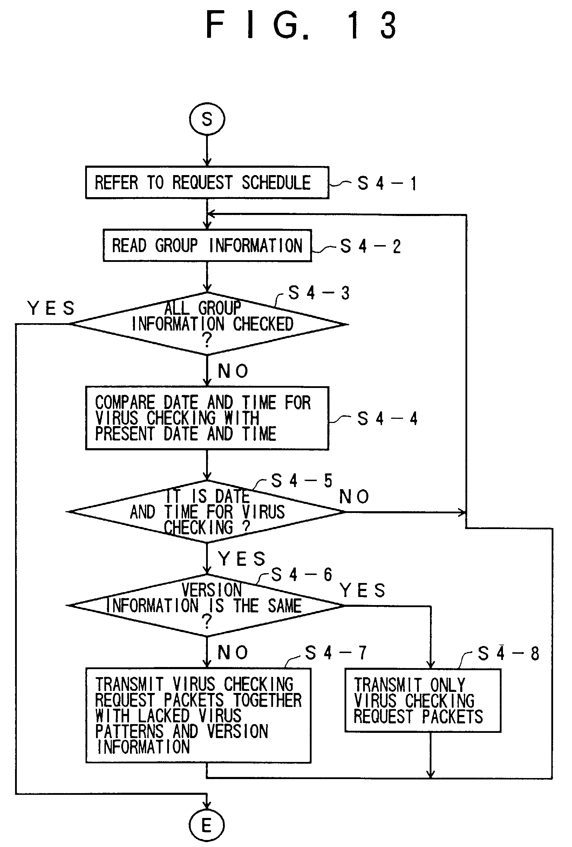

FIG.13 shows an operation flowchart of the computer virus checking request program of the server machine 50 of the second embodiment.

In the server machine 50, in accordance with the computer virus checking request program, the request schedule areas 12c are referred to, and each group information is read therefrom (steps S4-1, S4-2 and S4-3).

Then, the issue date and time information stored in the issue date and time information area of the group information is read and is compared with the present date and time (in a step S4-4). When the thus-read issue date and time information indicates the present date and time (Yes of a step S4-5) for one group, the version information of the group information header area of the group information of the group is referred to, and is compared with the version information stored in the latest computer virus pattern data area 52a provided in the data area 52 of the file device 51 (in a step S4-6).

In the step 4-6, when the version information of the group information header area of the group information of the group is different from the version information stored in the latest computer virus pattern data area 52a provided in the data area 52 of the file device 51, it is determined that each of the client machines belonging to the group lacks certain computer virus patterns. The missing patterns and the version information stored in the latest computer virus pattern data area 52a provided in the data area 52 of the file device 51 are added to each virus checking request packet. The server machine 50 transmits the virus checking request packets, together with the missing patterns and the version information stored in the latest computer virus pattern data area 52a provided in the data area 52 of the file device 51, to the network 4 for the destinations of the member mail addresses stored in the member mail address areas of the member information areas of the client machines belonging to the group (in a step S4-7).

In the step 4-6, when the version information of the group information header area of the group information of the group is the same as the version information stored in the latest computer virus pattern data area 52a provided in the data area 52 of the file device 51, the server machine 50 transmits only the virus checking request packets to the network 4 for the destinations of the member mail addresses stored in the member mail address areas of the member information areas of the client machines belonging to the group (in a step S4-8).

The client machines 3-1-1 through 3-1-m1, 3-2-1 through 3-2-m2, ..., 3-n-1 through 3-n-mn monitor the packets transmitted to the network 4. The client machines belonging to the group receive, from the network 4, the packets which have been transmitted to the network 4 for these client machines.

When receiving the virus checking request packets together with the missing computer virus patterns and the version information, each of the client machines belonging to the group adds the received computer virus patterns to the computer virus pattern area 22d, and updates the version information of the computer virus pattern area 22d to the version information received together with the computer virus checking request packet.

Then, each client machine belonging to the group executes the computer virus checking program shown in FIG.9 and transmits the result of checking for the computer viruses to the server machine 2.

The server machine executes the computer virus checking result processing program shown in FIG.10.

In the second embodiment, the computer virus checking program stored in each of the client machines 3-1-1 through 3-1-m1, 3-2-1 through 3-2-m2 ..., 3-n-1 through 3-n-mn can be executed with the latest version of the computer virus patterns. Accordingly, it is possible to positively protect the network system from the computer viruses.

In the second embodiment, the server machine supplies the computer virus patterns and the version information. However, an arrangement in which the computer virus checking program is loaded in the server machine 2 and the client machines 3-1-1 through 3-1-m1, 3-2-1 through 3-2-m2, ..., 3-n-1 through 3-n-mn access the server machine 2 when checking for computer viruses is performed can be considered.

As a third embodiment of the present invention, an embodiment in which the computer virus checking program is loaded in the server machine 2 and the client machines 3-1-1 through 3-1-m1, 3-2-1 through 3-2-m2, ..., 3-n-1 through 3-n-mn access the server machine 2 when checking for computer viruses is performed will now be described with reference to figures.

First, an arrangement of a server machine will now be described with reference to a figure.

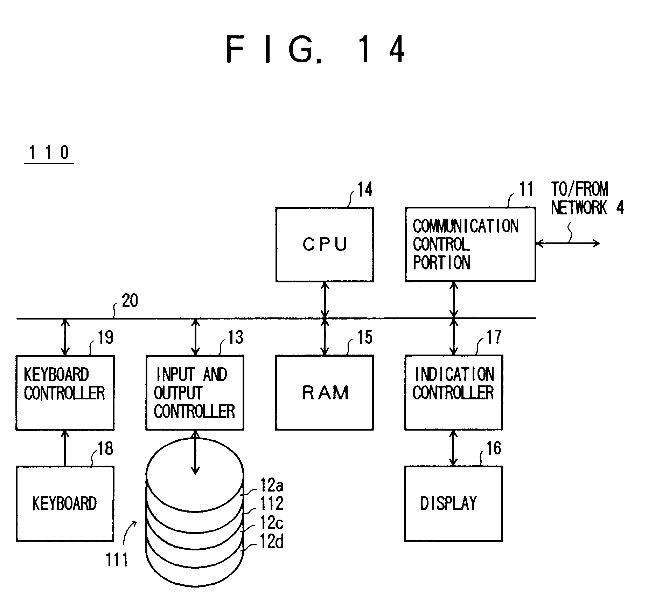

FIG.14 shows a block diagram of the server machine 110 in the third embodiment of the present invention. In FIG.14, the same reference numerals are given to the blocks which are the same as those of FIG.2, and description thereof will be omitted.

In the server machine 110 in the third embodiment, the computer virus checking program for checking for computer viruses and the computer virus patterns to be used by the program are stored in a program area 112 of a file device 111.

In the operations in the server machine 110, the operations performed until the server machine transmits the computer virus checking request to the client machines, that is, the operations by the computer virus checking request program, shown in FIG.8, and the operations of producing the list of the results of checking for computer viruses, which are supplied from the client machines, respectively, that is, the operations by the computer virus checking result processing program, shown in FIG.10, are the same as those of the first embodiment. Accordingly, the descriptions thereof will be omitted.

In response to the computer virus checking request transmitted from the server machine, the client machine 120 accesses the computer virus checking program stored in the program area 112 of the file device 111 of the server machine 110.

An arrangement of the client machine 120 will now be described with reference to a figure.

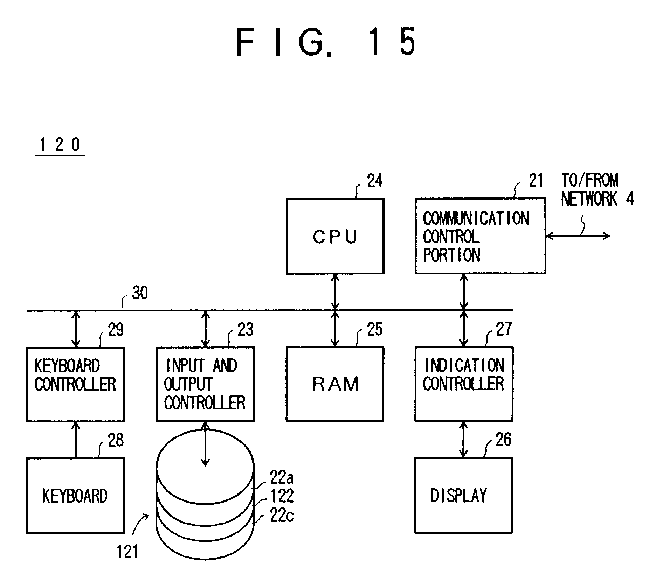

FIG.15 shows a block diagram of the client machine 120 in the third embodiment of the present invention. In FIG.15, the same reference numerals are given to the blocks which are the same as those of FIG.5, and description thereof will be omitted.

In the client machine 120 in the third embodiment, the computer virus checking program is not stored in a program area 122 of a file device 121. Instead, a computer checking virus checking control program is stored in the program area 122 of the file device 121.

Similar to the other embodiments, the computer virus checking control program is supplied via the communication control portion 21, or is supplied as a result of being read from a portable recording medium such as a CD-ROM, a floppy disk or the like, through a reading device, the computer virus checking control program being previously recorded in the portable recording medium . The thus-supplied program is stored in the program area 122 of the file device 121. This program is stored in the RAM 25 when the program is executed. The CPU 24 performs the predetermined operations in accordance with the program.

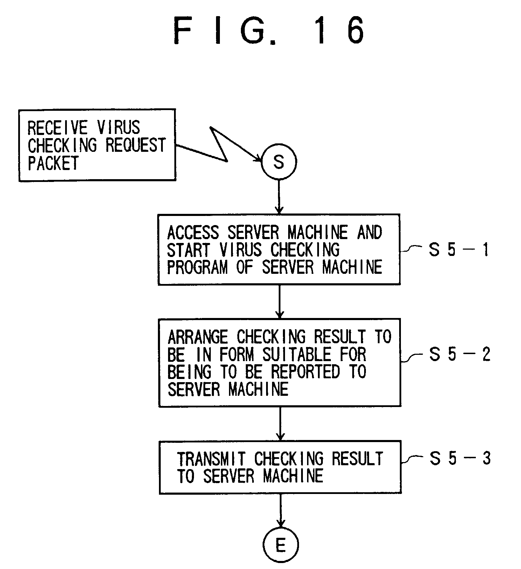

FIG.16 shows an operation flowchart of the computer virus checking control program of the client machine 120 in the third embodiment of the present invention.

When the client machine 120 receives the computer virus checking request packet which has been transmitted from the server machine 110 to the client machine 120, the client machine starts the computer virus checking control program. The client machine 120 accesses the computer virus checking program set in the program area 112 of the file device 111 of the server machine 110 and starts the computer virus checking program (in a step S5-1).

When the computer virus checking program set in the server machine 110 is started in the step S5-1, the data stored in the data area 22a of the file device 121 is compared with the computer virus patterns stored in the program area 112 of the file device 111, in sequence, so that the computer virus patterns are searched for the computer virus pattern which is the same as the data. When, by this comparison, there is data which is the same as one of the computer virus patterns, it is determined that the computer virus exists in the client machine 120. Then, the computer virus is removed, and the version information of the version of the computer virus pattern and the information of the detected virus are held. When, by the above-mentioned comparison, it is determined that there is no data which is the same as any one of the computer virus patterns, it is determined that no computer virus exists in the client machine 120. Then, the version information of the version of the computer virus patterns which were used for checking for the computer viruses, and the information indicating that no computer virus exists are held.

Then, the result of checking for the computer viruses obtained through execution of the computer virus checking program is arranged to be in a form suitable for being transmitted to the server machine 2, as shown in FIG.6 (in a step S5-2).

Then, in the step S5-3, the client machine 120 produces a packet to be transmitted to the server machine 110 and transmits the produced packet to the server machine 110. This packet includes result report information including the group ID of the group to which the client machine 120 belongs, the member ID of the member of the client machine 120, the result of checking for the computer viruses and the version information of the computer virus pattern(s), as shown in FIG.6.

When receiving the result of checking for the computer viruses from the client machines 120 (similar to the system shown in FIG.1, many client machines 120 are connected with the server machine 110 via the network, and each client machine 120 performs the above-described operations in accordance with the schedule set in the computer virus checking request schedule shown in FIG.3), the server machine 110 executes the computer virus checking result processing program, the operations of which are shown in FIG.10.

In the third embodiment, the computer virus checking program and the computer virus patterns are provided in the server machine 110. In response to reception of the computer virus checking request from the server machine 110, the client machine 120 accesses the computer virus checking program of the server machine 110 and checking for computer viruses is performed on the client machine 120. Thereby, each of the client machines 120 can be checked by using the computer virus patterns of the same version. Therefore, only by setting the latest version of the computer virus patterns in the server machine 110, each of the client machines 120 can be checked by using latest version of the computer virus patterns. Thus, the client machines 120 can be positively protected from computer viruses.

Further, because each client machine 120 does not need to store the computer virus checking program and the computer virus patterns, it is possible to increase a file area which can be effectively used.

In each of the first, second and third embodiments, the server machine transmits the computer virus checking request unconditionally, whether or not each client machine is in a condition where communication can be performed with the server machine. However, by determining whether or not the computer virus checking request is transmitted in accordance with predetermined conditions, transmission of the computer virus checking request can be performed effectively.

A fourth embodiment of the present invention, in which the computer virus checking request is transmitted in accordance with predetermined conditions will now be described.

First, an arrangement of a server machine 210 in the fourth embodiment will now be described with reference to a figure.

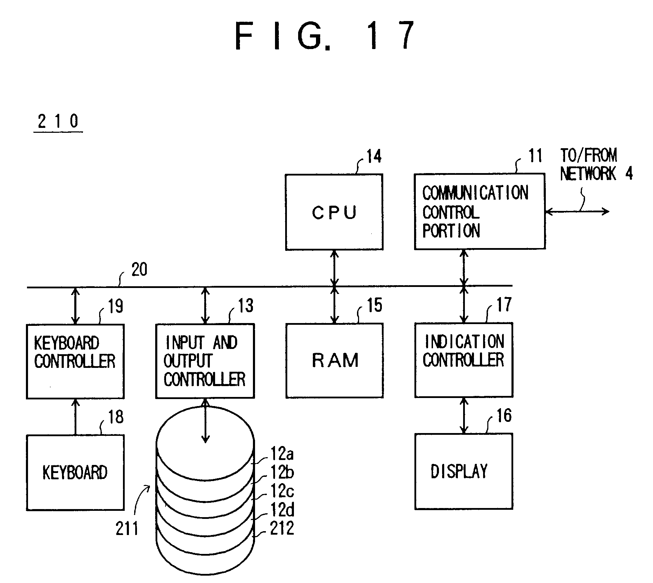

FIG.17 shows a block diagram of the server machine 210 in the fourth embodiment of the present invention. In FIG.17, the same reference numerals are given to the blocks which are the same as those of FIG.2, respectively, and description thereof will be omitted.

In the server machine 210 in the fourth embodiment, a sending state management area 212 is included in a file device 211.

In the sending state management area 212, information for collectively managing computer virus checking request for sending scheduled dates at which the server machine 210 will transmit the computer virus checking request to the client machines, time limits by which checking for the computer viruses are performed on the client machines, respectively, are stored.

Each client machine in the fourth embodiment may be the same as each of the above-mentioned client machines 3-1-1 through 3-1-m1, 3-2-1 through 3-2-m2, ..., 3-n-1 through 3-n-mn. Accordingly, the description thereof will be omitted.

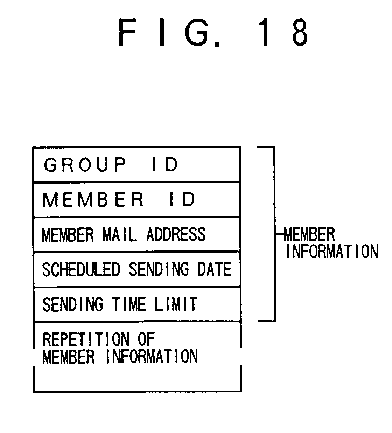

FIG.18 shows the data arrangement of the sending state management area 212 of the server machine 210.

In the sending state management area 212, member information for members, each of the client machines thereof being in a condition where communication can be performed with the server machine 210 and also the time limit by which checking for computer viruses is performed on the client machine has not expired, is stored. The sending state management area 212, for each member, includes a group ID area for storing the group ID of the group to which the client machine of the member belongs, a member ID area for storing the member ID of the member, a member mail address area for storing the mail address of the destination (client machine) to which the result of checking for computer viruses is transmitted, a sending scheduled date area for storing the scheduled date at which the computer virus checking request will be sent to the client machine, and a sending time limit area for storing the time limit by which checking for computer viruses is performed on the client machine. In the sending state management area 212, the above-described member information for one member is repetitively stored for the members, the client machines thereof being in a condition where communication can be performed with the server machine 210 and also the time limit by which checking for computer viruses is performed on the client machine has not expired.

Based on the information of the sending state management area 212 shown in FIG.18, the server machine 210 sends the computer virus checking request to the above-mentioned client machines.

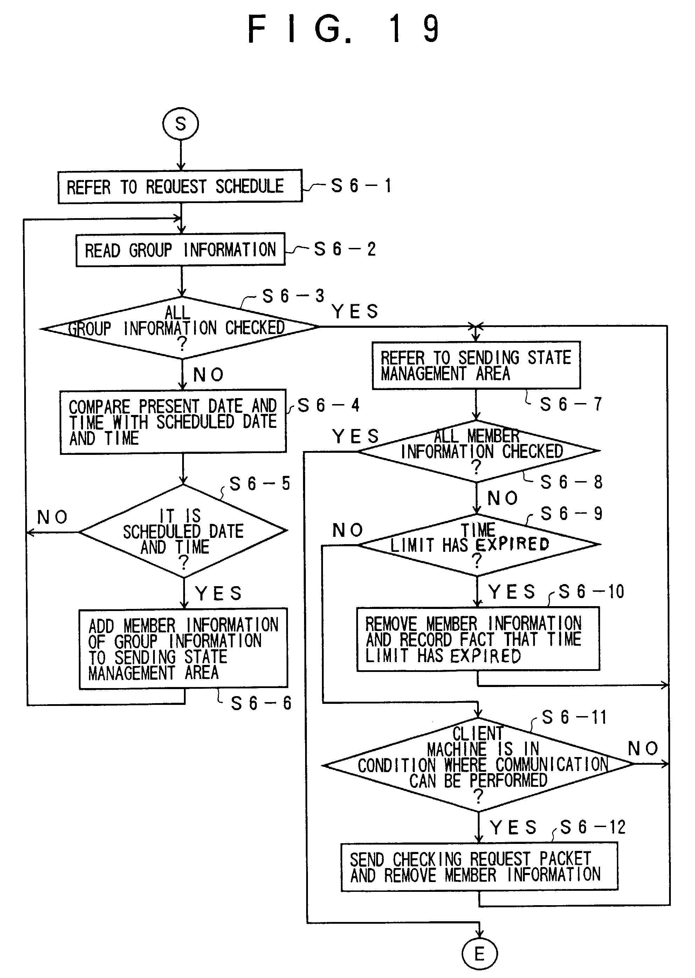

FIG.19 shows an operation flowchart of the computer virus checking request processing program in the fourth embodiment of the present invention.

In the server machine 210, in accordance with the computer virus checking request processing program, the request schedule such as that shown in FIG.3 is referred to and group information set in the request schedule is read in sequence (in steps S6-1, S6-2 and S6-3).

Then, the issue date and time information stored in the issue date and time information area of the read group information is compared with the present date and time (in a step S6-4). When the issue date and time information indicates the present date and time (Yes in a step S6-5), the member information for each member of the group information is added to the sending state management area 212 (in a step S6-6). At this time, an operator of the server machine 210 inputs information of the sending time limit for each member of the group so that the member information of the sending state management area for each member of the group, as shown in FIG.18, is produced.

After the request schedules have been checked for all groups such as G1 through Gn in the first embodiment (Yes in the step S6-3), the member information for all members stored in the sending state management area 212 is referred to, in sequence (in steps S6-7 and S6-8).

At this time, the time limit stored in the sending time limit area of the member information for each member is referred to, and it is determined whether or not the time limit by which checking for computer viruses is performed on the client machine of the member has expired (in a step S6-9). Then, when it is determined that the time limit by which checking for computer viruses is performed on the client machine of the member has expired (Yes in the step S6-9), the member information for the member referred to at the present time is removed from the sending state management area 212, and information indicating that the time limit by which checking for computer viruses is performed on the client machine of the member has expired is recorded in the member information, for a particular member, of the checking result storage area 12d (in a step S6-10). Then, the operation flow is returned to the step S6-7 and the member information, for the subsequent member, of the sending state management area 212 is referred to.

When it is determined that time limit by which checking for computer viruses is performed on the client machine of the member has not yet expired (No in the step S6-9), the server machine 210 accesses the client machine of the member information for the member referred to at the present time so as to determine whether or not that client machine is in a condition where communication can be performed with the server machine 210 (in a step S6-11).

Then, when it is determined the client machine is not in a condition where communication can be performed with the server machine 210 (No in the step S6-11), the operation flow is returned to the step S6-7 and the member information for the subsequent member is referred to.

When it is determined that the client machine is in a condition where communication can be performed with the server machine 210 (Yes in the step S6-11), it can be determined that the client machine is the client machine on which checking for computer viruses is to be performed. Therefore, the server machine 210 sends the computer virus checking request packet to the destination (client machine) of the member mail address stored in the member mail address area of the member information for the member referred to at the present time in the sending state management area 212, for causing the client machine of the member to perform checking for computer viruses, and the member information for the member is removed from the sending state management area 212 (in a step S6-12). Then, the operation flow is returned to the step S6-7 and the member information for the subsequent member is referred to.

According to the fourth embodiment, when it is determined that the client machine is not in a condition where communication with the server machine 210 can be performed, due to lack of power for the client machine or occurrence of problem in this client machine, or it is determined that the time limit by which checking for computer viruses is performed on the client machine has expired, sending the computer virus checking request to the client is automatically omitted. Thereby, checking for computer viruses can be performed efficiently.

Further, the present invention is not limited to the above-described embodiments, and variations and modifications may be made without departing from the scope of the present invention.

## Claims

1. A terminal management method for a network system through which a plurality of terminal apparatuses (3-1-1 through 3-1-m1, 3-2-1 through 3-2-m2, ..., 3-n-1 through 3-n-mn), each of which has computer virus checking means for checking for computer viruses, and a management apparatus (2; 50; 110; 210) are connected, said method comprising the steps of:
a) causing said management apparatus to send computer virus checking requests, to said plurality of terminal apparatuses, which cause said computer virus checking means to check for the computer viruses;
b) causing said plurality of terminal apparatuses, in response to reception of the computer virus checking requests, to start performance of checking said plurality of terminal apparatuses for the computer virus through said computer virus checking means and to perform checking of said plurality of terminal apparatuses for the computer viruses.

2. The terminal management method according to claim 1, wherein said step a) causes said management apparatus to send the computer virus checking requests to previously set apparatuses of said plurality of terminal apparatuses.

3. The terminal management method according to claim 1, further comprising the steps of:
c) causing said plurality of terminal apparatuses to send results of checking for the computer viruses, obtained from performance of said step b), to said management apparatus; and
d) causing said management apparatus to collectively manage the results of checking for the computer viruses sent from said plurality of terminal apparatuses in the step c).

4. The terminal management method according to claim 3, further comprising the step of e) causing said management apparatus to send the results of checking for the computer viruses sent from said plurality of terminal apparatuses in the step c) to previously set apparatuses of said plurality of terminal apparatuses.

5. The terminal management method according to claim 1, further comprising the steps of:
c) causing said management apparatus to have, as management information for one of said plurality of terminal apparatuses, information indicating that a time limit by which checking for the computer viruses is performed has expired, when the time limit has expired; and
d) preventing said management apparatus from sending the computer virus checking request to said one of said plurality of terminal apparatuses.

6. The terminal management method according to claim 1, wherein said step a) causes said management apparatus to send through said computer virus checking means, to said plurality of terminal apparatuses, computer virus patterns together with the computer virus checking requests, said computer virus patterns being used for finding a computer virus having a computer virus pattern of the computer virus patterns .

7. A terminal management method for a network system through which a management apparatus (2; 50; 110; 210) and a plurality of terminal apparatuses (3-1-1 through 3-1-m1, 3-2-1 through 3-2-m2, ..., 3-n-1 through 3-n-mn) are connected, said method comprising the steps of:
a) causing said management apparatus to be provided with computer virus checking means for checking for computer viruses;
b) causing said management apparatus to send computer virus checking requests to said plurality of terminal apparatuses; and
c) causing said plurality of terminal apparatuses, in response to reception of the computer virus checking requests, to access said computer virus checking means so as to cause said computer virus checking means to check said plurality of terminal apparatuses for the computer viruses.

8. The terminal management method according to claim 7, wherein said step b) causes said management apparatus to send the computer virus checking requests to previously set apparatuses of said plurality of terminal apparatuses.

9. The terminal management method according to claim 7, further comprising the steps of:
d) causing said plurality of terminal apparatuses to send results of checking for the computer viruses, obtained from performance of said step c), to said management apparatus; and
e) causing said management apparatus to collectively manage the results of checking for the computer viruses sent from said plurality of terminal apparatuses.

10. The terminal management method according to claim 9, further comprising the step of f) causing said management apparatus to send the results of checking for the computer viruses sent from said plurality of terminal apparatuses to previously set apparatuses of said plurality of terminal apparatuses.

11. The terminal management method according to claim 7, further comprising the steps of:
d) causing said management apparatus to have, as management information for one of said plurality of terminal apparatuses, information indicating that a time limit for checking for the computer viruses is performed has expired, when the time limit has expired; and
e) preventing said management apparatus from sending the computer virus checking request to said one of said plurality of terminal apparatuses.

12. A management apparatus (2; 50; 110; 210), connected with a plurality of terminal apparatuses (3-1-1 through 3-1-m1, 3-2-1 through 3-2-m2, ..., 3-n-1 through 3-n-mn) through a network (4), each of said plurality of terminal apparatuses being provided with computer virus checking means for checking for computer viruses, comprising:
means (14) for producing computer virus checking requests for starting the checking for the computer viruses through said computer virus checking means; and
means (11) for sending the computer virus checking requests to said plurality of terminal apparatuses.

13. The management apparatus according to claim 12, further comprising designating means (14) for designating which ones of said plurality of terminal apparatuses the computer virus checking requests are transmitted to,
wherein said management apparatus transmits the computer virus checking requests to the terminal apparatuses designated by said designating means.

14. The management apparatus according to claim 12, further comprising:
receiving means (11) for receiving results of checking said plurality of terminal apparatuses for the computer viruses in response to the computer virus checking requests; and
managing means (14) for managing the results of checking for the computer viruses received from said plurality of terminal apparatuses.

15. The management apparatus according to claim 14, further comprising transmitting means (11) for transmitting the results of checking for the computer viruses, received from said plurality of terminal apparatuses, to previously set apparatuses of said plurality of terminal apparatuses.

16. The management apparatus according to claim 12, further comprising:
determining means (14) for determining whether a time limit for checking each of said plurality of terminal apparatuses for the computer viruses has expired;
information providing means (14) for providing, as management information of one of said plurality of terminal apparatuses, information indicating that the time limit for checking for the computer viruses has expired, when the time limit has expired; and
preventing means (14) for preventing the sending means from sending the computer virus checking request to said one of said plurality of terminal apparatuses.

17. The management apparatus according to claim 12, further comprising computer virus pattern sending means (11) for sending computer virus patterns to said plurality of terminal apparatuses, said computer virus patterns being used for finding a computer virus having a computer virus pattern of the computer virus patterns through said computer virus checking means.

18. A terminal apparatus (3-1-1 through 3-1-m1, 3-2-1 through 3-2-m2, ..., 3-n-1 through 3-n-mn), connected with a management apparatus (2; 50; 110; 210) through a network (4), comprising:
means (21) for receiving a computer virus checking request from said management apparatus;
means (24) for starting a check for computer viruses, in response to reception of the computer virus checking request; and
means (24) for performing checking for computer viruses.

19. The terminal apparatus according to claim 18, further comprising means (21) for sending results of checking for the computer viruses, performed in response to reception of the computer virus checking request, to said management apparatus.

20. The terminal apparatus according to claim 18, wherein:
said receiving means receives computer virus patterns together with the computer virus checking request; and
said performing means performs checking for the computer viruses using the received computer virus patterns.

21. A terminal apparatus (3-1-1 through 3-1-m1, 3-2-1 through 3-2-m2, ..., 3-n-1 through 3-n-mn), connected with a management apparatus (2; 50; 110; 210) through a network (4), comprising:
means (21) for receiving a computer virus checking request from said management apparatus; and
means (24) for accessing computer virus checking means of said management apparatus in response to reception of the computer virus checking request and performing checking said terminal apparatus for the computer viruses.

22. A computer system in which a plurality of terminal apparatuses (3-1-1 through 3-1-m1, 3-2-1 through 3-2-m2, ..., 3-n-1 through 3-n-mn), each of which has computer virus checking means for checking for computer viruses, and a management apparatus (2; 50; 110; 210) are connected through a network (4), comprising:
said management apparatus provided with computer virus checking request transmitting means (11) for transmitting computer virus checking requests for causing said computer virus checking means to start checking for the computer viruses to said plurality of terminal apparatuses;
said plurality of terminal apparatuses provided with computer virus checking starting means (24), in response to reception of the computer virus checking requests from said management apparatus, for causing said computer virus checking means to start checking for the computer virus.

23. A computer system, in which a management apparatus (2; 50; 110; 210) is connected with a plurality of terminal apparatuses (3-1-1 through 3-1-m1, 3-2-1 through 3-2-m2, ..., 3-n-1 through 3-n-mn) through a network (4), wherein;
said management apparatus is provided with:
computer virus checking means for checking for computer viruses; and
computer virus checking request transmitting means (11) for transmitting the computer virus checking requests to said plurality of terminal apparatuses; and
said plurality of terminal apparatuses are provided with:
accessing means (24) for accessing the computer virus checking means of said management apparatus in response to reception of the computer virus checking requests from said management apparatus; and
computer virus checking performing means (24) for performing checking of said plurality of terminal apparatuses for computer viruses through the computer virus checking means.

24. A computer readable recording medium, used in a computer (2; 50; 110; 210) connected, via a network (4), to a plurality of terminal apparatuses (3-1-1 through 3-1-m1, 3-2-1 through 3-2-m2, ..., 3-n-1 through 3-n-mn), each of which comprises computer virus checking means for checking for computer viruses, having computer readable program code means embodied in said medium, said computer readable program code means comprising:
program code means for producing computer virus checking requests which cause said computer virus checking means to start checking for the computer viruses; and
program code means for transmitting the produced computer virus checking requests to said plurality of terminal apparatuses.

25. A computer readable recording medium, used in a computer (3-1-1 through 3-1-m1, 3-2-1 through 3-2-m2, ..., 3-n-1 through 3-n-mn) which is connected with a management apparatus (2; 50; 110; 210) through a network (4), having computer readable program code means embodied in said medium, said computer readable program code means comprising:
computer program code means for receiving a computer virus checking request from said management apparatus;
computer program code means for starting a check for computer viruses; and
computer program code means for performing checking for computer viruses.

26. A computer readable recording medium used in a computer (3-1-1 through 3-1-m1, 3-2-1 through 3-2-m2, ..., 3-n-1 through 3-n-mn) connected with a management apparatus (2; 50; 110; 210) through a network (4), having computer readable program code means embodied in said medium, said computer readable program code means comprising:
computer program code means for receiving computer virus checking request from said management apparatus;
computer program code means, in response to reception of the computer virus checking request, for accessing computer virus checking means of said management apparatus, and starting performance of checking for computer viruses through said computer virus checking means; and
computer program code means for checking said computer for the computer viruses through said computer virus checking means.
